# EUROPEAN PATENT APPLICATION

(11) **EP 2 664 638 A2**
(43) Date of publication of application: **20.11.2013**
(21) Application number: 13167709.8
(22) Date of filing: 14.05.2013
(51) Int. Cl.: C08G 18/28, C09D 175/04

(54) **Polyurethane painting system having low Volatile Organic Compounds emission**

(30) Priority: 18.05.2012 IT MI20120862
(71) Applicant: Guidetti, Gianluigi, 20123 Milano (IT)
(72) Inventor: Guidetti, Gianluigi, 20123 Milano (IT)
(74) Representative: Bottero, Claudio

(57) **Abstract**

The main object of the patent is that of illustrating a way for reducing the emissions of VOCs (volatile organic compounds) when using polyurethane painting systems with 2 transparent and/or pigmented components. With this method, more in general, there is a reduction in the viscosity of the painting products.

For this reason a polyurethane painting system is described having two components comprising a hydroxyl component and a component containing isocyanates characterised in that it further comprises at least one linear or weakly branched alcohol containing 6 to 14 carbon atoms of formula I: CH₃-(CH₂)ₙ-OH wherein n = 5 - 13; or of formula II: CH₃-CHR-(CH₂)ₙ-OH wherein R = -CH₃ or - CH₂-CH₃ and n = 3 - 11 if R = -CH₃ and n = 2 - 10 if R = -CH₂-CH₃ and in which the hydroxyl groups of said alcohol or of said alcohols are 5 - 30% by weight of the total weight of the hydroxyls present in the system.

## Description

### Background of the invention

The present invention refers to a polyurethane system with two components comprising at least one linear or weakly branched alcohol containing from 6 to 14 carbon atoms, which allows to reduce the emissions of volatile organic compounds.

Within the framework of the description, the term: volatile organic compounds (VOCs) is used to indicate the solvents contained in the system.

The obtained film with the polyurethane system according to the present invention, as well as the manufactured products coated therewith are also described.

### Prior art

Amongst painting products, the family of polyurethane paints and varnishes (p.u.) solvent based is now one of the most important. In fact, polyurethane paints transparent, pigmented, metallized or paints showing special effects are successfully used in countless end markets. For example, polyurethane paints are used in the car refinishing field, the field of industrial painting, construction, rustproofing, the shipping sector, the galvanising sector, the protection and decoration of furniture and objects made from wood, chipboard, MDF, etc and building components, the design field, the field of household appliance components, TV, the air-conditioning field, computer science field, the field of car components, the leather and paper field etc.

All solvent based painting products (and therefore not only p.u. ones), during the drying process, release the contained solvents (VOC) which in many cases are directly introduced into the atmosphere (the treatment of the emissions is indeed limited to very big plants) putting the capability of self-regeneration through photodegradation of our planet to the test. In brief, the introduction of the solvents (VOC) into the atmosphere creates ecological problems because it is linked to the formation of ozone and has an impact on global warming, on the occurrence of acid rain, etc. Paints are certainly among the most important sources of air pollution related to the presence of solvents. Not only do the obvious ecological considerations impose reductions in the emissions of solvents into the atmosphere generated by paint, but so does the law. To confirm what has been described thus far, as an example, we shall mention the legislative decree 27 March 2006, n.161 having title: "Implementation of the directive 2004/42/CE for limiting volatile organic compound emissions deriving from use of solvents in some paints and varnish, as well as other products used for the coachwork". Polyurethane painting products with two components comprise a first component, which is usually defined as a base, with polymer/oligomer containing -OH groups, normally defined as polyols as the reactive part and a second component, which is usually defined as a hardener, containing free isocyanic groups as the reactive part.

The isocyanic groups are intrinsically very reactive groups, as a matter of fact:
- they violently react with the amines, especially if they are primary (-NH₂), forming polyurea;
- they react with water forming biuret and giving off CO₂, such a characteristic being used industrially for example in expanded polyurethane foam, but that in painting products (except for "moisture curing" systems), can cause problems (defects such as bubbles, pinholes), such that the solvents to be used in p.u. systems, are defined as "urethane grade" since they have a particularly low water content;
- they react with hydroxyls (alcohols, polyalcohols, polymers containing -OH groups) forming the urethane group. The primary hydroxyl group is more reactive, the secondary one reacts much more slowly, the tertiary one has such a low reactivity that solvents containing this group (for example DAA) are used without any problem in p.u. paints since they evaporate without reacting with the isocyanates.
- they react with themselves: isocyanuration.

By mixing, at the moment of use, the base with the hardener the following reaction occurs -OH, -NCO (hydroxyls with isocyanates) which forms urethane groups. This is, of course, the main reaction for polyurethane painting products, but it is not the only one because there is always the reaction of the isocyanic groups with the atmospheric humidity and it can be foreseen for there to be both isocyanuration, and the reaction with amine (with the formation of polyurea).

With the purpose of making a painting product with low content of solvents, in the state of the art, the following considerations have been proposed, which the formulator must respect:
- the hydroxyl containing polymer must have the lowest viscosity possible. There are, however, technical limitations which are not possible to overcome today. For example the formulations for car refinishing and/or for high end industry are normally based, on hydroxyl acrylic resins (-OH usually comprised between 4 and 5.5% calculated on dry resin) with low viscosity so as to have the highest dry residue possible (sometimes, for example, a mixture of acrylic resins and polyester are used). At the state of the art these resins have a residue of 75% - 80% with a viscosity of between 2000 and 7000 mPa.s at 23°C (25°C). Resins with a lower viscosity (and thus used with an higher dry residue) are not, to this day, considered suitable for achieving the end qualities (drying characteristics and chemical-physical properties) that are required by the market. Moreover, the formulator, due to technical requirements, often uses binders, for example CABs which, even if present in small amounts, solubilising them, substantially increases the weight of the VOCs/litre;
- using "strong" solvents i.e. solvents that rapidly reduce the viscosity of the polymers and having the lowest specific weight possible (for the same weight they carry out a greater diluting action). The family of diluents with the best "performances" is that of the aliphatic ketones (for example MEK and MIBK as rapid solvents and MAK and MIAK as slow or medium-slow solvents), but these solvents, in particular MAK and MIAK, are much more expensive than other p.u. solvents;
- using, in the hardener, isocyanates with low viscosity. Today, for example, as trimers of HDI there are aliphatic polyisocyanates with low viscosity which are without solvents and have a viscosity of about 1200 mPa.s (for example: Desmodur 3600; Tolonate HDT LV) and also with a viscosity of about 700 mPa.s (for example: Desmodur 3900; Tolonate HDT LV2).

The users, in particular in the cold seasons, at the moment of use, tend to add diluents "generously" which forces the formulators to put further effort into reducing the VOC/lt.

In conclusion, therefore, respecting the law of the VOC limits, although certainly possible, is in practice not easy to do also in the light of always tighter cost limits to be respected.

### Summary of the invention

In relation to solvent based polyurethane painting products, the Applicant has observed that the obvious ecological considerations and the legislation impose on paint manufacturers difficult formulation problems for reducing the emissions of VOCs deriving from drying their products which, moreover, create undesired cost increase.

In the state of the art it is known that the solvents suitable for use in polyurethane systems must not contain groups that are capable of reacting with the isocyanic groups, in particular primary and secondary hydroxyl groups.

Despite what has been described, the Applicant has provided a polyurethane painting system that is capable of effectively reducing the emissions of VOCs by using linear or weakly branched alcohol containing from 6 to 14 carbon atoms, used as reactive diluents, as a replacement of part of the VOCs present in the painting system. Said alcohols are substantially more hydrophobic than the alcohols normally used as solvents in painting products.

Therefore, according to a first aspect, the present invention relates to a polyurethane painting system with two components comprising a hydroxyl component and a component containing isocyanates characterised in that it further comprises at least one linear or weakly branched alcohol containing from 6 to 14 carbon atoms of formula I: CH₃-(CH₂)ₙ-OH in which n = 5 - 13; or of formula II: CH₃-CHR-(CH₂)ₙ-OH in which R = -CH₃ o -CH₂-CH₃ and n = 3 - 11 1 if R = -CH₃ and n = 2 - 10 if R = -CH₂-CH₃ and in which the hydroxyl groups of said at least one alcohol are 5 - 30% by weight of the total weight of the hydroxyls present in the system.

Preferably, the linear or weakly branched alcohol contains from 8 to 12 carbon atoms.

Preferably, the linear or weakly branched alcohol contains from 6 to 12 carbon atoms of formula I: CH₃-(CH₂)ₙ-OH in which n = 5 - 11, or of formula II: CH₃-CHR-(CH₂)ₙ-OH in which R = -CH₃ or -CH₂-CH₃ and n = 3 - 9 if R corresponds to -CH₃ and n = 2 - 8 if R corresponds to -CH₂-CH₃.

It is useful, first of all to underline that, within the framework of the present description and in the subsequent claims, except where otherwise indicated, all numbers expressing amounts, quantities, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated hereafter.

In a preferred embodiment, the alcohols above can be included in the hydroxyl component or, alternatively, they can be put in the diluent to be added at the moment of use. In this case the diluent should be dosed precisely so as to not modify the amount of hydroxyls generated with respect to what has been programmed.

Preferred examples of the aforementioned alcohols, which can be used in the present invention and that are available on the market, are n-hexyl, n-heptyl, n-octyl, 2-ethylhexyl, n-nonyl (pelargonic alcohol), n-decyl (caprylic alcohol), isodecyl, n-undecyl, n-dodecyl (lauryl alcohol), n-tridecyl, n-tetradecyl (myristic alcohol).

Advantageously, the alcohol described above, when mixed with the hardener, reacts with the isocyanates present in the hardener itself and therefore remains in the dry film that is generated acting as a reactive diluent. Consequently, it is not part of the emission of solvents (VOC) which, when the varnish and/or paint is drying, are introduced into the atmosphere, thus decreasing the emissions of these systems with respect to those of conventional systems.

Advantageously, the specific weight of the alcohols described above is low, normally below 0.85 kg/It, and it is very close to that of the ketones.

By using a linear or weakly branched alcohol containing from 6 to 14 carbon atoms, more elastic and softer films are obtained because they are less crosslinked, but the recovery of the hardness is, normally, easily obtained by increasing the isocyanic component (over cross-linking).

One alternative way of recovering the hardness provides using polyalcohols or polyols with low molecular weight, preferably lower than 300, containing from 2 to 4 hydroxyls that restore the cross-linking density without increasing the viscosity of the product. Preferably, said polyols having low molecular weight can also contain nitrogen atoms (tertiary amines).

Preferred examples of the aforementioned compounds that can be used in the present invention and that are available on the market are:
- dialcohols such as those with formula OH(CH₂)ₙOH with n comprised between 2 and 10;
- trifunctional alcohols such as:TMP (trimethylolpropane); TEOA (triethanolamine);
- tetrafunctional alcohols such as: pentaerythritol; tetra(2-hydroxypropyl)ethylenediamine.

Preferably, said polyalcohols having low molecular weight are dosed between 5 and 20% with respect to the total of the hydroxyls present in the base. As an example, the hydroxyl base could contain hydroxyls 70% deriving from the hydroxyl base resin (acrylic resin, polyester, etc); 20% deriving from the linear or weakly branched alcohol containing 6 to 14 carbon atoms; 10% deriving from the polyalcohols having low molecular weight indicated above.

Since both the isocyanates used in these systems, and the polyalcohols having low molecular weight, described above, normally have a viscosity that is substantially lower than that of the hydroxyl resins, the present invention leads to further advantages in terms of reduction of the VOC emissions since, advantageously, less viscous products require less dilution in the application. Since the alcohols used have a very low volatility it is necessary to modify the mixture of the solvents present by reducing or eliminating the slow solvents and replacing them with faster solvents (which, incidentally, are much less expensive). The alcohols described above, initially operate as slow solvents keeping the film open and thus preventing defects such as pinholes, peeling, etc. and subsequently, by bonding with the isocyanates, they become part of the film (reactive diluent).

Within the framework of the description and in the following claims, the term hydroxyl component is used to indicate the so called base. Preferably, the base comprises a hydroxyl polymer selected from the group comprising acrylic, polyester, alkyd resins, polymers deriving from castor oil, polyethers and polycaprolactones, also defined as polyols.

Purely as an example it is worth considering polyols with the trademark Desmophen by Bayer Material Science, by the trademark Macrinal (Cytec), by the trademark Setalux (Nuplex), by the trademark Domacryl (Helios) etc.

Optionally, other components which can be present in the base are selected from the group comprising: polymer components such as CABs (cellulose acetate butyrate), vinyl resins, nitro-synthetic resins, ketone resins, aldehyde resins, adhesion promoting resins of various nature, polyalcohols having low molecular weight, as specified above; various additives such as additives for reducing the surface tension and the levelling that may or may not be of the silicon-based type; anti-foaming additives; antioxidants and heat stabilizers; light stabilizers (HALS); uv absorbers, catalysts (containing metals like DBTDL (Dibutyltin Dilaurate), naphthenate or zinc octoate etc. or amine compounds like TEDA, DMEA, etc.); opaquing substances, such as precipitated and post-treated amorphous silica, polyolefinic waxes, teflon waxes, etc and "urethane grade" solvents.

Preferred examples of solvents that can be used in the present invention are: - aromatic solvents (toluene, xylene, naphtha solvents from petroleum);
- acetates (ethyl, butyl, isobutyl, amyl acetate, etc.);
- various oxygenated esters (PMA methoxy propyl acetate, EPA ethoxy propyl acetate, ABC glycol butyl acetate, etc.);
- ketones (MEK - methyl ethyl ketone, MIBK methyl isobutyl ketone, MAK - methyl amyl ketone, MIAK methyl isoamyl ketone, DAA diacetone alcohol, cyclohexanone, etc.);

Preferably, ketones which combine a strong viscosity cutting action with a low specific weight, are used.

Normally, on the other hand, aliphatic solvents (for example: n-hexane, n-decane, mineral spirits, etc.) cannot be used because the isocyanates used for the cross-linking (with the exception of some isophorone diisocyanate derivates) do not accept them.

For technical reasons, solvents containing reactive groups such as amine, alcohol with low molecular weight must not, on the other hand, be used (for example: methanol, ethanol, alcohols C3 and C4), oxygenated alcohols (PM methoxy propanol, ethoxy propanol, DPM methoxy dipropanol, etc.) since reacting with the polyisocyanates and, acting as chain terminators, interfere with the correct cross-linking of the system. In fact oxygen, if present, and the hydroxyl group represent an important part of their molecular weight. This makes them hydrophilic and often totally soluble in water. Even adding small amounts of the aforementioned alcohols the film of polyurethane varnish/paint is ruined.

Advantageously, the solvents described above (aromatic, acetates which may or may not be oxygenated, ketones, etc) are present in reduced amounts because they are partially substituted by the alcohol or alcohols according to the present invention.

Within the framework of the present invention and in the following claims, the term "component containing isocyanates" is used to indicate the so-called hardener. Preferably, the hardener comprises oligomers, adducts, isocyanurates, polyisocyanates, etc. derived from at least one monomer selected from the group comprising TDI (toluene diisocyanate), MDI (diphenylmethane diisocyanate), HDI (hexamethyl diisocyanate), IPDI (isophorone diisocyanate), CHDI (cyclohexane diisocyanate), and mixtures thereof.

Products which, for the same chemical base, have a lower viscosity for example HDI trimers are preferably selected.

The hardener can contain solvents of the "urethane grade" type preferably selected from the ketone family (MIBK, MAK, MIAK).

The cheapest conventional products in which the isocyanate is of aromatic nature, have a limited light stability, good mechanical characteristics and good chemical seal. More expensive products that use aliphatic isocyanates (HDI, IPDI, CHDI), in addition to the characteristics above, also have excellent light resistance.

Purely as an example it is worth remembering the isocyanates with the trademark Desmodur (Bayer Material Science); Tolonate (Rhodia); Basonat (BASF), etc.

In a preferred embodiment, the painting systems with 2 components according to the present invention preferably foresee an over cross-linking, i.e. a presence of isocyanic groups in the hardener that is greater than the presence of hydroxyls in the base. The over cross-linking index can vary as a function of the desired characteristics and hardness.

Preferably, the NCO/OH ratio is higher than the stechiometric (index 100) and, even more preferably, it is comprised between 110 and 150.

In a further preferred embodiment, with some hydroxyl resins, like for example acrylic resins with limited content of hydroxyls (indicatively lower than 3%), the NCO/OH ratio can also be much higher, for example up to 200 -300 .

In a preferred embodiment, the polyurethane systems made according to the present invention can be, in addition to transparent, also pigmented so as to make paints or enamels. In this case, the hydroxyl component or base, made according to what has been indicated above, must moreover contain inorganic or organic pigments and, when necessary, mineral fillers, in addition to some wetting agents for promoting the inclusion of pigments and fillers according to the usual refining process.

Preferably, alternatively to the technology foreseen in the previous paragraph, the pigmented films are obtained with the so-called tintometric method. In this case the base or hydroxyl component is made up of a transparent part (which in some cases can also comprise some inert fillers) called converter (that contains all the components of the base foreseen for transparent products according to the present finding, as illustrated above) which is mixed, in predetermined ratios with pigmentary paste with which the desired colour is obtained. The single pigmentary pastes normally contain a single pigment in addition to the specific binder of the paste (which may be absent in the case of slurry paste), solvents, wetting agents, suspending agents (products that prevent hard sedimentation of the pigments) and in some cases one or more inert fillers.

In order to obtain a substantial reduction in the emissions of the pigmented paint, in making pastes it is preferably foreseen, together with the pigment, only when this is an organic pigment, to use fillers with oil absorption threshold (for example micronised barium sulphate) which, with the use of suitable wetting agents are able to come between the particles of pigment without practically increasing the viscosity, but indeed in some cases reducing it without modifying the "gloss" of the products obtained with these pastes. If possible it is moreover preferable to foresee, for the pastes to be used for products with high dry residue, the simultaneous use of strong solvents with low specific weight (ketone solvents even if these, are not normally used in pigmentary pastes) as a replacement of the conventional solvents present in the pastes for making, with the same viscosity, pastes with less gr/It of VOCs.

In a preferred embodiment, the micronised inert filler is dosed at 10 - 50% by weight of the pigmentary pastes weight and the ketone solvents constitute 10 - 100% by weight of the weight of the paste volatile fraction.

Advantageously, the polyurethane products made according to the present invention, both transparent and pigmented, can be products in the bright, shiny, semi-shiny, satinized or opaque version and having a smooth, textured, embossed, textured aspect, etc.. The products made according to the present invention can be used as bases, intermediates or finishes.

According to a second aspect thereof, the present invention relates to a hydroxyl component for a polyurethane system with two components comprising at least one linear or weakly branched alcohol containing 6 to 14 carbon atoms of formula I: CH₃-(CH₂)ₙ-OH in which n = 5 - 13; or of formula II: CH₃-CHR-(CH₂)ₙ-OH in which R = -CH₃ or -CH₂-CH₃ and n = 3 - 11 if R = -CH₃ and n = 2 - 10 if R = -CH₂-CH₃, in which the hydroxyl groups of said alcohol are 5 - 30% by weight of the total weight of the hydroxyls present in the system.

Preferably, said at least one linear or weakly branched alcohol is as defined above.

According to a third aspect thereof, the present invention relates to the use of a linear or weakly branched alcohol with 6 to 14 carbon atoms of formula I: CH₃-(CH₂)ₙ-OH in which n = 5 - 13; or of formula II: CH₃-CHR-(CH₂)ₙ-OH in which R = - CH₃ or -CH₂-CH₃ and n = 3 - 11 if R = -CH₃ and n = 2 - 10 if R = -CH₂-CH₃ for reducing the emissions of volatile organic compounds in a polyurethane painting system with two components.

Preferably, said at least one linear or weakly branched alcohol is as defined above.

According to a fourth aspect thereof, the present invention relates to a coating film that is obtained with a painting system according to the invention, in which said film is transparent, pigmented, glossy, satinised, opaque, smooth, textured or embossed and used as a base, intermediate or finish.

Advantageously, the polyurethanic varnish and paint according to the invention not only have low emissions, but also have improved hydrophobicity and elasticity, the same hardness, excellent application characteristics and low cost.

According to a fifth aspect thereof, the present invention relates to manufactured products totally or partially coated with a coating film according to the invention, made from one or more materials selected from the group comprising metals (for example iron, aluminium, light alloys, bronze, brass, copper, noble metals such as silver, gold, metals used in galvanic finishes etc.), inorganic supports (for example marble, granite, ceramic, glass, cement, plaster, gypsum, plasterboard etc.), thermoplastic or thermosetting rigid plastic materials, (for example abs, pc, pvc, ps, pa, phenolic, melaminic etc.), elastomeric plastic materials (for example polyurethane, rubber of various nature etc.), wood, MDF (medium density fiberboard), chipboard, masonite, hides, leather, imitation leather, fabrics, paper and cardboard.

The application of the coating film according to the invention on the manufactured products according to above can be made directly or subsequent to previous applications of various varnishing materials such as, for example, wash primer, shop primer (PVB modified with phenolic and/or epoxy resins), primers of various nature (for example synthetic, epoxy, polyurethane, etc.) metallic bases, undercoats, etc.

### Embodiments

In the following examples, given purely as an indication and not for limiting purposes, we shall provide the results of a series of tests carried out by the Applicant with the purpose of highlighting the reduction of the emissions and the improved performance of the polyurethane painting systems according to the present invention. For the sake of simplicity we shall refer to some transparent products because, in this way it is easier to understand the results that can be obtained with the product of the present invention.

A man skilled in the art can easily extend the results to products which are transparent, opaque and/or pigmented paints.

In all the examples an acrylic resin is used as the hydroxyl polymer, its characteristics are reported hereafter:
- Dry residue: 80%;
- Viscosity: 6000 +/-2000 mPa.s at 25°C;
- Solvent: butyl acetate;
- Hydroxyls on dry resin: 4.2%;
- Equivalent weight: about 505 gr/mol (in the form of supply);
- Specific weight: about 1,00 gr/cm³ (in the form of supply).

Also the isocyanate used is always the same. Its characteristics are reported hereafter:
- Aliphatic polyisocyanate with low viscosity of the HDI trimer;
- Dry residue: 100%;
- NCO Content: 23 +/- 0.5 %;
- Viscosity: 1200 +/- 300 mPa.s at 23°C, about 1100 mPs.s at 25°C;
- HDI monomer: < 0.25%;
- Equivalent weight: about 183 gr/mol;
- Specific weight: about 1.16 gr/cm3.

The term: "additives, catalysts, UV abs, etc." is used to indicate the group of the following raw materials: additives for reducing the surface tension and the silicon and non-silicon type levelling; metal and aminic catalysts; antioxidants and heat stabilizer; light stabilizers (HALS); uv absorbers. Also in this case the group of the additives has been kept constant. The indicated weight is the sum of all these additives.

The properties obtained with the recipes of the following examples are described at the end of the list of the examples.

### EXAMPLE 1 (Reference)

### Preparation of a polyurethane reference system

The reference base was prepared in the following way:

| | |
|---|---|
| Hydroxyl acrylic resin | 80.00 p.b.w. (parts by weight) |
| Methyl isoamyl ketone (MIAK) | 17.00 p.b.w. |
| Additives, catalysts, UV abs, etc. | 3.00 p.b.w. |

The reference hardener was prepared in the following way:

| | |
|---|---|
| Polyisocyanate | 90.00 p.b.w. |
| MIAK | 10.00 p.b.w. |

Base/hardener ratio: base: 3 p.b.w.; hardener: 1 p.b.w.
NCO/ OH ratio: about 104%
Specific weight of the base (calculated analytically): 0.96340 gr/cm³
Specific weight of the hardener (calculated analytically): 1.11252 gr/cm³
Dry residue of the base (calculated analytically): 66.32%
VOCs in the base (solvents): 33.68%.

The product, after mixing the base with the hardener, can be applied for example with a bar coater. For spray applications it is necessary to dilute with MIAK at 10 - 20%.

In order to calculate the gr/It of solvents emitted during drying, a dilution of 20% is foreseen. The gr/It emitted are about 360 gr/lt.

### Preparation of polyurethane paint according to the invention

### EXAMPLE 2 (Invention)

A first base according to the invention was prepared in the following way:

| | |
|---|---|
| hydroxyl acrylic resin | 80.00 p.b.w. |
| Isodecanol | 10.00 p.b.w. |
| MIBK | 7.00 p.b.w. |
| additives, catalysts, UV abs etc. | 3.00 p.b.w. |

the hardener of this base was prepared in the following way:

| | |
|---|---|
| Polyisocyanate | 90.00 p.b.w. |
| MIBK (methyl isobutyl ketone) | 10.00 p.b.w. |

% of the hydroxyls (-OH) of the isodecanol with respect to the total hydroxyls: about 28%
Base/hardener ratio: base: 100 p.b.w.; hardener: 50 p.b.w.
NCO/ OH ratio: about 111%
Specific weight of the base (calculated analytically): 0.96587 gr/cm³
Specific weight of the hardener (calculated analytically): 1.11043 gr/cm³
Dry residue of the base + the isodecanol (calculated analytically): 76.32%
VOCs in the base (volatile solvents): 23.68%.

The product, after mixing the base with the hardener, can be applied for example with a bar coater. For the spray application it is necessary to dilute with MIBK at 10-20%.

In order to calculate the gr/It of solvents emitted during drying, a dilution of 20% is foreseen. The gr/It emitted are about 280.6 gr/lt with a reduction of 79.4 gr/It equal to about 22% with respect to the reference example.

### EXAMPLE 3 (Invention)

A second base according to the invention was prepared in the following way:

| | |
|---|---|
| Hydroxyl acrylic resin | 80.00 p.b.w. |
| Isodecanol | 8.00 p.b.w. |
| MIBK | 9.00 p.b.w. |
| Additives, catalysts, UV abs, etc. | 3.00 p.b.w. |

The hardener of this base was prepared in the following way:

| | |
|---|---|
| polyisocyanate | 90.00 p.b.w. |
| MIBK | 10.00 p.b.w. |

% of the hydroxyls of the isodecanol with respect to the total hydroxyls: about 24.25 %
Base/hardener ratio: base: 100 p.b.w.; hardener: 50 p.b.w.
NCO/ OH ratio: about 117.8%
Specific weight of the base (calculated analytically): 0.96480 gr/cm³
Specific weight of the hardener (calculated analytically): 1.11043 gr/cm³
Dry residue of the base + the isodecanol (calculated analytically): 74.32%
VOCs in the base (volatile solvents): 25.68%.

The product, after mixing the base with the hardener, can be applied for example with a bar coater. For spray applications it is necessary to dilute with MIBK at 10-20%.

In order to calculate the gr/it of solvents emitted during drying, a dilution of 20% is foreseen. The gr/It emitted are about 292 gr/It with a reduction of 68 gr/lt equal to about 18.9 % with respect to the reference example.

### EXAMPLE 4 (Invention)

A third base according to the invention was prepared in the following way:

| | |
|---|---|
| Hydroxyl acrylic resin | 80.00 p.b.w. |
| Isodecanol | 6.00 p.b.w. |
| MIBK | 11.00 p.b.w. |
| Additives, catalysts, UV absorbers, etc. | 3.00 p.b.w. |

The hardener of this base was prepared in the following way:

| | |
|---|---|
| Polyisocyanate | 90.00 p.b.w. |
| MIBK | 10.00 p.b.w. |

% of the hydroxyls of the isodecanol with respect to the total hydroxyls: about 19.38 %
Base/hardener ratio: base: 100 p.b.w.; hardener: 50 p.b.w.
NCO/ OH ratio: about 125.4%
Specific weight of the base (calculated analytically): 0.96372 gr/cm³
Specific weight of the hardener (calculated analytically): 1.11043 gr/cm³
Dry residue of the base + the isodecanol (calculated analytically): 72.32%
VOCs in the base (volatile solvents): 27.68%.

The product, after mixing the base with the hardener can be applied for example with a bar coater. For spray applications it is necessary to dilute with MIBK at 10 - 20%.

In order to calculate the gr/It of solvents emitted during drying, a dilution of 20% is foreseen. The gr/It emitted are about 303.2 gr/It with a reduction of 56.8 gr/It equal to about 15.8 % with respect to the reference example.

### EXAMPLE 5 (Invention)

A fourth base according to the invention was prepared in the following way:

| | |
|---|---|
| Hydroxyl acrylic resin | 80.00 p.b.w. |
| Isodecanol | 4.40 p.b.w. |
| MIBK | 12.60 p.b.w. |
| Additives, catalysts, UV absorbers, etc. | 3.00 p.b.w. |

The hardener of this base was prepared in the following way:

| | |
|---|---|
| Polyisocyanate | 85,00 p.b.w. |
| MIBK | 15,00 p.b.w. |

% of the hydroxyls of the isodecanol with respect to the total hydroxyls: about 15.00 %
Base/hardener ratio: base: 100 p.b.w.; hardener: 50 p.b.w.
NCO/ OH ratio: about 124.9%
Specific weight of the base (calculated analytically): 0.96078 gr/cm³
Specific weight of the hardener (calculated analytically): 1.08720 gr/cm³
Dry residue of the base + the isodecanol (calculated analytically): 70.72%
VOC in the base (volatile solvents): 29.28%.

The product, after mixing the base with the hardener, can be applied for example with a bar coater. For spray applications it is necessary to dilute with MIBK at 5 - 15%.

In order to calculate the gr/lt of solvents emitted during drying, a dilution of 15% is foreseen. The gr/It emitted are about 307.2 gr/It with a reduction of 52.8 gr/It equal to about 14.7 % with respect to the reference example.

In the rest of the description we shall include some results obtained, in comparison with the reference example (example 1), of the paint films of the examples 2, 3, 4 and 5 applied with bar-coaters directly on aluminium with dry film thicknesses of 35 microns +/- 5 after drying at room temperature for about 24 h followed by oven drying at about 80°C for 2 h and by a 7 day rest time.
- **appearance of the film:** all the test pieces had appearances that were very similar to one another (perfect transparency, high fullness and gloss, pleasant finish);
- **adhesion** (cross cut test standard ISO 2409;1992 E):
   example 1: GT0
   example 2: GT0
   example 3: GT0
   example 4: GT0
   example 5: GT1
   NB: GT0: = no detachment; GT1: = 5% detachment of the film of paint... GT5: = total detachment of the film of paint.
- **elasticity**
   1) Cylindrical mandrel bend test (standard ISO 1519 1973 E)
      example 1: 1/4 inch: pass
      example 2: 1/8 inch: pass
      example 3: 1/8 inch: pass
      example 4: 1/8 inch: pass
      example 5: 1/8 inch: pass
      NB: the shorter the diameter of the mandrel not causing cracking, the more flexible the film.
   2) Cupping test (standard ISO 1520 -1973 E)
      example 1: 6 mm: pass
      example 2: 8 mm: pass
      example 3: 8 mm: pass
      example 4: 8 mm: pass
      example 5: 8 mm: pass
      NB: the higher the cupping value without cracking, the more elastic the film. It should be noted that it was not possible to increase the cupping value beyond 8 mm because beyond 8 mm the aluminium support would break.
- **hardness:** pencil hardness (standard uni 13523-4:2001)
   example 1:.2H.: pass
   example 2:.HB: pass
   example 3:. H: pass
   example 4:.2H: pass
   example 5:.2H: pass
   NB: the harder the pencil that does not mark the film, the harder the film
- **water resistance** (a drop of water protected by a watch glass is left at room temperature for 24 h. The film must not be modified at all: ok). Standard ISO 2812; 1993 E Method 3.

The film was not damaged in any of the tests.

The paints obtained with the recipes of example 4 and of example 5, moreover, were, after complete cross-linking, subjected to the marker removal test.
After writing on the film of paint with a Pentel N50 marker, and left resting for 48 h, the writing is erased with Scottex type paper soaked in denatured ethyl alcohol. After a few wipes the writing is perfectly erased without leaving any mark. In both the tests, finally, there was no variation in the hardness of the film.

In the light of what has been described above, it can be concluded that the hardness of the film of examples 2 and 3 were lower than standard. Examples 4 and 5 were the same.

As highlighted above, it is possible to increase the hardness of the examples 2 and 3 by increasing the dose of the isocyanate (indicatively, but not for limiting purposes, to bring the index NCO-/ OH- to 130 - 150) or with the use of polyalcohols.

In all the other tests all the examples gave the same results or improved results with respect to the standard.

Moreover, the cost of the raw materials/kg of the dry residue of the 5 examples was verified, calculated based upon the prices communicated by the manufacturers of the raw materials at the end of December 2011 (cost of the raw materials of the base + cost of the raw materials of the necessary hardener + cost of the raw materials of the solvent used for making the viscosity suitable for spraying applications).

The highest cost of the raw materials/kg of dry residue was that of example number 1 (reference). For the other examples the following was obtained: example 2:- € 1.06, example 3: - € 0.96; example 4: - € 0.90; example 5: - € 0.86. The results are thus also positive from an economic point of view. The economic advantage is greater if the isocyanates used are cheaper than that foreseen in the examples.

Clearly, those skilled in the art may introduce variants and modifications to the above described invention, in order to satisfy specific and contingent requirements, variants and modifications which fall anyhow within the scope of protection as is defined by the following claims.

## Claims

1. Polyurethane painting system with two components comprising a hydroxyl component and a component containing isocyanates **characterised in that** further comprises at least one linear or weakly branched alcohol containing 6 to 14 carbon atoms of formula I: CH₃-(CH₂)ₙ-OH wherein n = 5 - 13; or of formula II: CH₃-CHR-(CH₂)ₙ-OH wherein R = -CH₃ or -CH₂-CH₃ and n = 3 - 11 if R = -CH₃ and n = 2 - 10 if R = -CH₂-CH₃ and wherein the hydroxyl groups of said at least one alcohol are 5 - 30% by weight of the total weight of the hydroxyls present in the system.

2. Polyurethane painting system according to claim 1, wherein said at least one alcohol is included in the hydroxyl component or is a diluent of said hydroxyl component, added in the application step of the painting system.

3. Polyurethane painting system according to claim 1 or 2, wherein said at least one alcohol is selected from the group comprising n-hexyl, n-heptyl, n-octyl, 2-ethylhexyl, n-nonyl, n-decyl, isodecyl, n-undecyl, n-dodecyl, n-tridecyl and n-tetradecyl alcohol.

4. Polyurethane painting system according to any one of claims 1-3, wherein said at least one alcohol contains 8 to 12 carbon atoms.

5. Polyurethane painting system according to any one of claims 1-4, wherein said hydroxyl component comprises a hydroxyl polymer selected from the group comprising acrylic, polyester, alkyd resins, polymers deriving from castor oil, polyethers and polycaprolactones.

6. Polyurethane painting system according to any one of claims 1-5, wherein said component containing isocyanates comprises oligomers, adducts, isocyanurates or polyisocyanates derived from at least one monomer selected from the group comprising TDI (toluene diisocyanate), MDI (diphenylmethane diisocyanate), HDI (hexamethyl diisocyanate), IPDI (isophorone diisocyanate), CHDI (cyclohexane diisocyanate) and mixtures thereof.

7. Polyurethane painting system according to any one of claims 1-6, wherein the NCO/OH ratio is higher than the stechiometric one (index 100) and, preferably, it is comprised between 110 and 150.

8. Polyurethane painting system according to any one of claims 1-7, further comprising at least one pigmentary paste comprising at least one pigment, if said pigment is organic at least one micronized filler dosed at about 10 - 50% by weight of the weight of the paste itself and ketone solvents that make up 10 - 100% by weight of the weight of the volatile fraction of said paste.

9. Hydroxyl component for a polyurethane system with two components comprising at least one linear or weakly branched alcohol containing 6 to 14 carbon atoms of formula I: CH₃-(CH₂)ₙ-OH wherein n = 5 - 13; or of formula II: CH₃-CHR-(CH₂)ₙ-OH wherein R = -CH₃ or -CH₂-CH₃ and n = 3 - 11 if R = -CH₃ and n = 2 - 10 if R = -CH₂-CH₃, wherein the hydroxyl groups of said alcohol are 5 - 30% by weight of the total weight of the hydroxyls present in the system.

10. Use of a linear or weakly branched alcohol with 6 to 14 carbon atoms of formula I: CH₃-(CH₂)ₙ-OH wherein n = 5 - 13; or of formula II: CH₃-CHR-(CH₂)ₙ-OH wherein R = -CH₃ or -CH₂-CH₃ and n = 3 - 11 if R = -CH₃ and n = 2 - 10 if R = -CH₂-CH₃ for reducing the emissions of volatile organic compounds in a polyurethane painting system with two components.

11. Coating film obtained from a painting system according to any one of claims 1-8, wherein said film is transparent, pigmented, glossy, satinized, opaque, smooth, textured or embossed and used as base, intermediate or finish.

12. Manufactured products totally or partially coated with a coating film according to claim 11 made from one or more materials selected from the group comprising metals, preferably iron, steel, stainless steel, aluminium, zinc and alloys thereof, titanium, copper and alloys thereof, silver, gold; galvanic deposits; inorganic materials, preferably marble, granite and stones in general, glass, cement, plaster; rigid plastic materials, either thermoplastic or thermosetting; elastomeric plastic materials; wood and materials containing wood, preferably MDF (medium density fiberboard) and chipboard; hides, leather, imitation leather, fabrics, paper and cardboard.
